# EUROPEAN PATENT APPLICATION

(11) **EP 4 643 629 A1**
(43) Date of publication of application: **05.11.2025**
(21) Application number: 22970067.9
(22) Date of filing: 27.12.2022
(51) Int. Cl.: A01C 7/20, A01M 7/00

(54) **AGRICULTURAL MATERIAL EJECTION DEVICE**

(71) Applicant: Kubota Corporation, Osaka 556-8601 (JP)
(72) Inventor: SAKAGUCHI Kazuo, Sakai-shi, Osaka 590-0908 (JP)
(74) Representative: Cabinet Beau de Loménie
(86) International application number: PCT/JP2022/048263
(87) International publication number: WO 2024/142274

(57) **Abstract**

There has been a demand for an agricultural material ejecting device configured to forcefully eject an agricultural material and operate suitably without the risk of, for example, the agricultural material being crushed or stuck to cause a rotation failure. An agricultural material ejecting device includes: a storage 7 configured to store a granular agricultural material; a discharger 8 configured to discharge the agricultural material from the storage 7; and an ejection mechanism 9 configured to eject the agricultural material from the discharger 8 toward a supply destination, the ejection mechanism 9 including: a gas compressor configured to compress gas; and a gas blower configured to blow compressed gas outward, the ejection mechanism being configured to eject the agricultural material with use of the gas that the gas blower blows.

## Description

### Technical Field

The present invention relates to an agricultural material ejecting device configured to supply an agricultural field with a granular agricultural material such as seeds and fertilizer.

### Background Art

A conventional seeder as an example agricultural material ejecting device may include a tank configured to store seeds as an example agricultural material, a discharge mechanism configured to discharge seeds from a lower portion of the tank, a shooter unit configured to shoot discharged seeds into an agricultural field, and a cylindrical guide extending vertically and configured to guide seeds from the discharge mechanism to the shooter unit. The shooter unit includes a rotor drivable to rotate at high speed and provided with two or more radially extending blades. The discharge mechanism discharges seeds. The guide lets the seeds pass therethrough and fall downward. The shooter unit ejects the seeds downward with use of the blades (see, for example, Patent Literature 1).

### Citation List

### Patent Literature

Patent Literature 1
International Publication No. WO2021-182108

### Summary of Invention

### Technical Problem

The conventional agricultural material ejecting device described above is configured such that the discharge mechanism discharges a granular agricultural material so that the agricultural material freely falls downward and that the shooter unit uses its blades rotating at high speed to shoot the agricultural material into an agricultural field during the free fall. The agricultural material ejecting device is thus disadvantageous as below.

The above configuration requires the use of the blades to forcefully eject an agricultural material downward, requiring the rotor to be driven to rotate at high speed. However, since the agricultural material freely falls toward the rotor rotating at high speed, the agricultural material does not necessarily enter a space upstream in the rotation direction of the blades; for instance, it may become stuck between the tip of a blade and the inner surface of the guide. This may unfortunately cause the blade to press the agricultural material strongly against the inner surface and crush the agricultural material or cause the agricultural material stuck as above to stop the rotation of the blades.

The above circumstances have led to a demand for an agricultural material ejecting device configured to forcefully eject an agricultural material and operate suitably without the risk of, for example, the agricultural material being crushed or stuck to cause an operation failure.

### Solution to Problem

An agricultural material ejecting device according to the present invention includes: a storage configured to store a granular agricultural material; a discharger configured to discharge the agricultural material from the storage; and an ejection mechanism configured to eject the agricultural material from the discharger toward a supply destination, the ejection mechanism including: a gas compressor configured to compress gas; and a gas blower configured to blow compressed gas outward, the ejection mechanism being configured to eject the agricultural material with use of the gas that the gas blower blows.

The above configuration allows the ejection mechanism to forcefully eject compressed gas outward from the gas blower to blow off an agricultural material toward an agricultural field. The use of blown gas allows the agricultural material to move in the air as linearly as possible to be supplied to a target position while preventing the agricultural material from being influenced by, for example, outside winds.

The above configuration simply causes compressed gas to act on a granule and does not let a granule collide with an object moving at high speed. This in turn prevents a granule from being stuck between objects.

The agricultural material ejecting device is therefore configured to forcefully eject an agricultural material and operate suitably without the risk of, for example, the agricultural material being crushed or stuck to cause an operation failure.

The agricultural material ejecting device may preferably be further configured such that the gas compressor includes: a cylinder tube; a piston slidable in the cylinder tube; and a slide operation mechanism configured to slide the piston to compress gas in the cylinder tube.

The above configuration allows the slide operation mechanism to slide the piston to compress gas in the cylinder tube. This, for instance, eliminates the need for the agricultural material ejecting device to be large-sized as a result of including a dedicated external device for compressing gas, and

The agricultural material ejecting device may preferably be further configured such that the slide operation mechanism includes: a spring configured to expand and contract in a direction in which the piston is slidable; a rack gear provided for the piston; a sector gear meshing with the rack gear and movable in such a direction as to contract the spring; and an actuator configured to rotate the sector gear.

With the above configuration, the actuator rotates the sector gear. The rotation moves the rack gear and slides the piston to contract the spring. In response to the sector gear stopping meshing with the rack gear, the contracted spring expands with a biasing force to slide the piston in the opposite direction rapidly to compress gas. The agricultural material ejecting device is configured to repeat this operation.

The agricultural material ejecting device is thus configured to repeat compressing gas automatically and eject the agricultural material continuously.

The agricultural material ejecting device may preferably be further configured such that the sector gear is in a form of a circular rotor including: a first gear in a partial area of an outer surface of the rotor; and a circular non-meshing portion not meshing with the rack gear in an area of the rotor in which area the first gear is absent.

With the above configuration, rotating the rotor with the gear portion of the sector gear meshing with the rack gear slides the piston in such a manner as to contract the spring. In response to the sector gear rotating until the non-meshing portion corresponds in position to the rack gear, the gear portion of the sector gear stops meshing with the rack gear, which slides the piston in the opposite direction due to the biasing force of the spring.

This allows the slide operation mechanism to be configured simply, without the need for a complicated configuration for, for example, moving the sector gear away from rack gear.

The agricultural material ejecting device may preferably be further configured such that the gas blower is at an end of the cylinder tube which end is opposite to the spring in the direction in which the piston is slidable, and the gas blower has a diameter smaller than an inner diameter of the cylinder tube.

With the above configuration, the expansion of the spring slides the piston in the direction opposite to the spring to compress gas in the cylinder tube. The gas blower, which has a diameter smaller than the inner diameter of the cylinder tube, forcefully releases the compressed machine body outwardly, thereby forcefully ejecting the agricultural material.

The agricultural material ejecting device may preferably be further configured such that the ejection mechanism is configured to eject the agricultural material in a direction inclined downward relative to a horizontal direction.

With the above configuration, the ejection mechanism ejects the agricultural material in a direction inclined downward relative to the horizontal direction to supply the agricultural material to an agricultural field or the like appropriately.

### Brief Description of Drawings

Fig. 1 is a front view of a work system.
Fig. 2 is a plan view of a work system.
Fig. 3 is a side view of a seeding device.
Fig. 4 is a vertical cross-sectional view of an ejection mechanism.
Fig. 5 is a vertical cross-sectional view of an ejection mechanism.

### Description of Embodiments

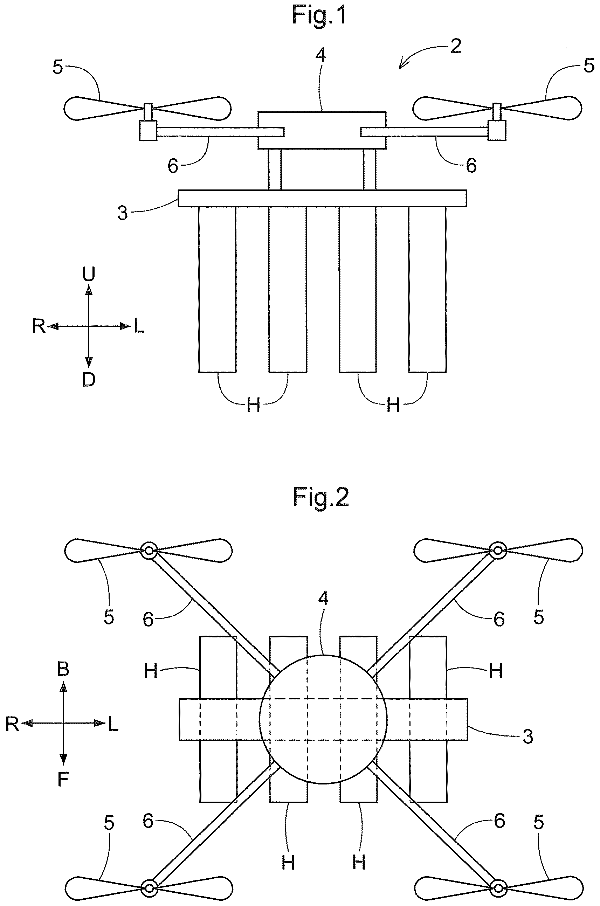

The description below deals with an embodiment of the present invention with reference to drawings. Unless otherwise specified, the description below uses terms such as "front" and "forward" to refer to the direction indicated with arrow F in Fig. 2, terms such as "rear" and "rearward" to refer to the direction indicated with arrow B Fig. 2, terms such as "left" and "leftward" to refer to the direction indicated with arrow L in Figs. 1 and 2, terms such as "right" and "rightward" to refer to the direction indicated with arrow R in Figs. 1 and 2, terms such as "above" and "upward" to refer to the direction indicated with arrow U in Fig. 1, and terms such as "below" and "downward" to refer to the direction indicated with arrow D in Fig. 1.

Figs. 1 and 2 each illustrate a work system configured to supply an agricultural material to an agricultural field. The work system includes seeding devices H (which are each an example of the "agricultural material ejecting device" according to the present invention) and an unmanned flying vehicle 2 called a drone. The flying vehicle 2 is configured to fly independently and includes a body 4, two or more propellers 5, and two or more arms 6.

The flying vehicle 2 may include any number of propellers 5 or arms 6. For the present embodiment, the flying vehicle 2 includes four propellers 5 and four arms 6. The arms 6 extend from the body 4 in a left and forward direction, in a right and forward direction, in a left and rearward direction, and in a right and rearward direction, respectively.

The flying vehicle 2 includes an electric motor (not illustrated in the drawings) configured to drive the propellers 5 for the flying vehicle 2 to fly. Specifically, the flying vehicle 2 drives the propellers 5 to float in the air and move in the vertical, front-rear, and lateral directions. The flying vehicle 2 is also configured to drive the propellers 5 to hover.

The flying vehicle 2 includes a holding frame 3. The seeding devices H are suspended from the body with the holding frame 3 in-between. The seeding devices H are arranged laterally apart from one another.

The seeding devices H are each configured to eject seeds N (which is an example of the "agricultural material") into a fertilization groove in an agricultural field. The flying vehicle 2 is controlled to fly for each seeding device H to move along the groove (not detailed). The flying vehicle 2 may be controlled to repeat moving and hovering so that the seeding devices H eject seeds while the flying vehicle 2 is hovering or to move continuously so that the seeding devices H eject seeds while the flying vehicle 2 is moving.

The flying vehicle 2 includes a well-known satellite positioning device (not illustrated in the drawings) and a control unit (not illustrated in the drawings) configured to control how the propellers 5 are driven to control how the flying vehicle 2 flies. The satellite positioning device is configured to receive global navigation satellite system (GNSS) signals from artificial satellites and generate positioning data indicative of the position of the flying vehicle 2 on the basis of the signals. The GNSS may be, for example, GPS, QZSS, Galileo, GLONASS, or BeiDou. The control unit is configured to, on the basis of the result of positioning by the satellite positioning device and preset data on a map of an agricultural field, control how the propellers 5 are driven for the flying vehicle 2 to move along a predetermined work path.

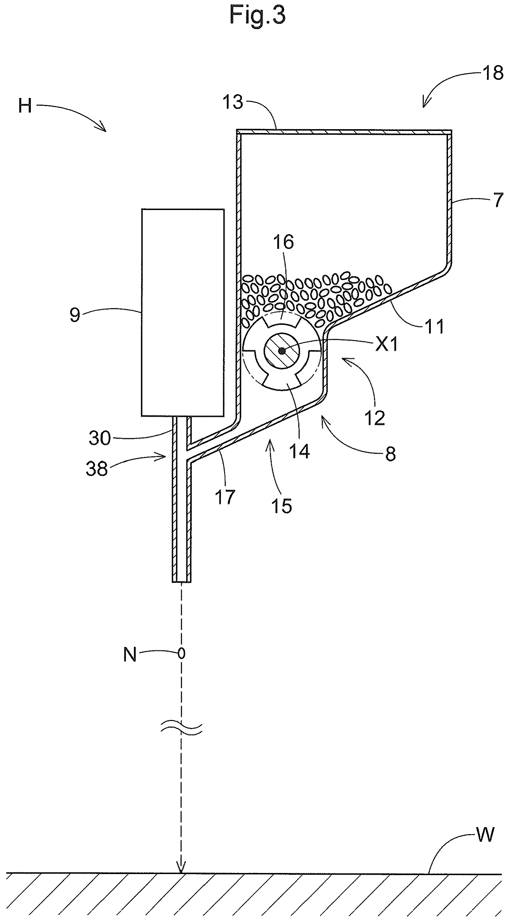

The description below deals with how the seeding devices H are configured. As illustrated in Fig. 3, the seeding devices H each include a hopper 7 as a storage, a discharger 8, and an ejection mechanism 9. The hopper 7 is configured to store seeds N. The discharger 8 is configured to discharge seeds N from the hopper 7. The ejection mechanism 9 is configured to eject seeds N from the discharger 8 toward an agricultural field as a supply destination.

The hopper 7 includes a side wall surrounding a storage space and has above the storage space an opening for receiving a large number of seeds N. The hopper 7 includes an attachable and detachable lid 13 configured to block the opening after the hopper 7 receives seeds N. The hopper 7 includes at a lower portion a flow-down guide 11 tapered downward and also includes at a lower end of the flow-down guide 11 a release section 12 configured to discharge stored seeds N downward.

The discharger 8 includes a discharge roller 14 facing the release section 12 of the hopper 7 and a discharge case 15 surrounding the discharge roller 14 and open toward the release section 12 of the hopper 7 and downward.

The discharge roller 14 is supported by the discharge case 15 in such a manner as to be rotatable about a lateral axis X1. The discharge roller 14 has at a peripheral surface three depressions 16 separated from one another at predetermined circumferential intervals and configured to receive granules. The discharge roller 14 has a small width along its rotation axis for each depression 16 to be capable of receiving one to several seeds N. The discharge roller 14 is drivable about the axis X1 by an electric motor (not illustrated in the drawings) or with use of rotary driving force from a drive shaft branching off from a propeller drive shaft of the flying vehicle 2.

The rotation of the discharge roller 14 lets seeds N be discharged downward from each depression 16. The discharge case 15 includes at a lower portion a cylindrical flow-down guide 17 configured to guide seeds N from the discharge roller 14.

The ejection mechanism 9 is lateral to the discharger 8 and is configured to eject seeds N from the discharger 8 forcefully toward an agricultural field.

The description below deals with the ejection mechanism 9. The ejection mechanism 9 includes a gas compressor 20 configured to compress gas and a gas blower 21 configured to blow compressed gas outward. The ejection mechanism 9 is configured to eject seeds N with use of gas blown by the gas blower 21.

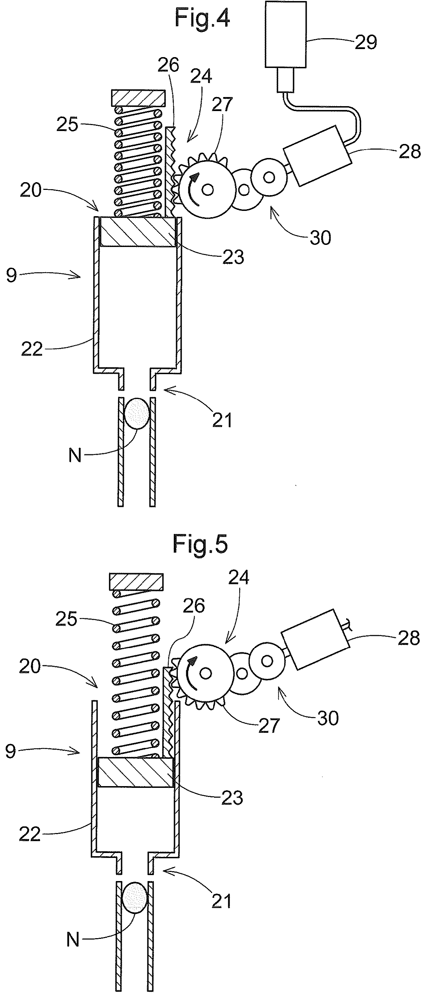

Specifically, as illustrated in Fig. 4, the gas compressor 20 includes a cylinder tube 22, a piston 23 slidable through the cylinder tube 22, and a slide operation mechanism 24 configured to slide the piston 23 to compress gas in the cylinder tube 22.

The slide operation mechanism 24 includes a spring 25, a rack gear 26, a sector gear 27, an electric motor 28, and a battery 29. The spring 25 is configured to expand and contract in the direction in which the piston 23 is slidable. The rack gear 26 is provided for the piston 23. The sector gear 27 meshes with the rack gear 26 and is movable in such a direction as to contract the spring 25. The electric motor 28 serves as an actuator configured to rotate the sector gear 27. The battery 29 is configured to supply driving electric power to the electric motor 28.

The sector gear 27 is in the form of a circular rotor including a gear in only a partial area of its outer surface. The ejection mechanism 9 includes a reduction gear 30. The electric motor 28 transmits motive power through the reduction gear 30 to the sector gear 27 to rotate the sector gear 27 in a predetermined direction (clockwise in Fig. 4) at a predetermined rotation speed so preset appropriately as to slide the piston 23 for the ejection of a seeds N.

The gas blower 21 is at that end of the cylinder tube 22 which is opposite to the spring 25 in the direction in which the piston 23 is slidable. The gas blower 21 has a diameter smaller than the inner diameter of the cylinder tube 22.

Activating the electric motor 28 to rotate the sector gear 27 in the predetermined direction (clockwise in Fig. 4) slides the rack gear 26 in such a direction as to contract the spring 25 (upward in Fig. 4). This in turn slides the piston 23 together with the rack gear 26 toward the spring 25 to contract the spring 25.

In response to rotating beyond a predetermined rotational phase, the sector gear 27 stops meshing with the rack gear 26. This lets the piston 23 rapidly slide in a direction opposite to the spring 25 (downward in Fig. 4) due to the biasing force of the spring 25. As illustrated in Fig. 5, this causes the piston 23 to compress gas in the cylinder tube 22, so that the gas blower 21 forcefully blows the compressed gas outward.

As illustrated in Fig. 3, the ejection mechanism 9 is configured to blow gas in a direction inclined downward relative to the horizontal direction, specifically, in a downward direction. The seeding devices H each include an agricultural material supply section 31 disposed at a portion of the gas blower 21 of the ejection mechanism 9 from which portion the gas blower 21 blows gas and configured to supply seeds N from the discharger 8.

Specifically, the flow-down guide 17 communicates with the gas blower 21 such that the gas blower 21 forcefully blows gas downward and that the gas causes a seed N from the discharger 8 to be ejected forcefully toward an agricultural field. The seeding devices H may each include a temporary holder (not illustrated in the drawings) configured to prevent free fall of a seed N from the flow-down guide 17 and temporarily hold the seed N. The temporary holder is desirably configured to hold a seed N with such a force that the temporary holder is openable with use of compressed air from the ejection mechanism 7. The temporary holder is configured to return to its original state after the ejection of a seed with use of compressed air. The temporary holder may be disposed at a position along the direction in which the ejection mechanism 9 ejects seeds or at a portion of the flow-down guide 17 which portion is slightly apart from the joint between the direction in which the flow-down guide 17 extends and the direction in which the ejection mechanism 9 ejects seeds.

### [Alternative Embodiments]

The description below deals with alternative embodiments.

(1) The slide operation mechanism 24 may include instead of the electric motor 28 an actuator such as an electric cylinder or a hydraulic motor. The slide operation mechanism 24 may have any of various configurations; for instance, the slide operation mechanism 24 may include a swing arm or a crank arm to slide the piston.
(2) The gas compressor 20 may have any of various configurations; for instance, the gas compressor 20 may include a gas storage configured to store gas and a compressor configured to supply gas into the gas storage, or include a storage container storing an easily vaporizable liquid and be configured to vaporize the liquid in the storage container for rapidly expanding gas to be blown. The ejection mechanism 9 is, in short, configured to blow compressed gas outward and not necessarily configured as above.
(3) The ejection mechanism 7 or the flying vehicle 2 may be controlled to change its orientation for the ejection mechanism 9 to eject an agricultural material not in a downward direction but obliquely in a forward and downward direction, a rightward and downward direction, or a leftward and downward direction as the direction inclined downward relative to the horizontal direction. The ejection mechanism 9 may include a swing mechanism configured to change the direction in which the ejection outlet faces.

### Industrial Applicability

The present invention is applicable to an agricultural material ejecting device configured to supply an agricultural field with a granular agricultural material such as seeds and fertilizer.

### Reference Signs List

- 7: Storage
- 8: Discharger
- 9: Ejection mechanism
- 20: Gas compressor
- 21: Gas blower
- 22: Cylinder tube
- 23: Piston
- 24: Slide operation mechanism
- 25: Spring
- 26: Rack gear
- 27: Sector gear
- 28: Actuator

## Claims

1. An agricultural material ejecting device, comprising:
a storage configured to store a granular agricultural material;
a discharger configured to discharge the agricultural material from the storage; and
an ejection mechanism configured to eject the agricultural material from the discharger toward a supply destination,
the ejection mechanism including:
a gas compressor configured to compress gas; and
a gas blower configured to blow compressed gas outward,
the ejection mechanism being configured to eject the agricultural material with use of the gas that the gas blower blows.

2. The agricultural material ejecting device according to claim 1, wherein
the gas compressor includes:
a cylinder tube;
a piston slidable in the cylinder tube; and
a slide operation mechanism configured to slide the piston to compress gas in the cylinder tube.

3. The agricultural material ejecting device according to claim 2, wherein
the slide operation mechanism includes:
a spring configured to expand and contract in a direction in which the piston is slidable;
a rack gear provided for the piston;
a sector gear meshing with the rack gear and movable in such a direction as to contract the spring; and
an actuator configured to rotate the sector gear.

4. The agricultural material ejecting device according to claim 3, wherein
the sector gear is in a form of a circular rotor including: a first gear in a partial area of an outer surface of the rotor; and a circular non-meshing portion not meshing with the rack gear in an area of the rotor in which area the first gear is absent.

5. The agricultural material ejecting device according to claim 3, wherein
the gas blower is at an end of the cylinder tube which end is opposite to the spring in the direction in which the piston is slidable, and
the gas blower has a diameter smaller than an inner diameter of the cylinder tube.

6. The agricultural material ejecting device according to any one of claims 1 to 5, wherein
the ejection mechanism is configured to eject the agricultural material in a direction inclined downward relative to a horizontal direction.
